# DEMANDE DE BREVET EUROPEEN

(11) **EP 1 367 777 A1**
(43) Date de publication de la demande: **03.12.2003**
(21) Numéro de dépôt: 03291272.7
(22) Date de dépôt: 27.05.2003
(51) Int. Cl.: H04L 12/28, H04M 11/06, H04L 29/06

(54) **Ensemble permettant l'accès à des serveurs d'applications**

(30) Priorité: 27.05.2002 FR 0206459
(71) Demandeur: Pitcho, Jean-Claude, 75006 Paris (FR)
(72) Inventeur: Pitcho, Jean-Claude, 75006 Paris (FR); Gernelle, François, 78150 Le Chesnay (FR)
(74) Mandataire: de Saint-Palais, Arnaud Marie

(57) **Abrégé**

L'invention concerne un ensemble comportant une pluralité d'unités d'activité (1), chaque unité comportant des moyens (100) informatiques et/ou de communication connectés à une interface (101) à haut débit, chaque interface (101) à haut débit étant reliée à une boucle locale (2) en cuivre s'étendant jusqu'à un central téléphonique (3) qui collecte les boucles (2) locales issues des unités d'activité (1), caractérisé en ce qu'il comporte un îlot (11) comportant des moyens (112) formant serveur de fichiers pour des applications du type client/serveur, lesdits moyens étant reliés à l'interface (101) haut débit des unités d'activité par l'intermédiaire d'un câble de renvoi (14) branché sur le central téléphonique (3).

## Description

### DOMAINE TECHNIQUE GENERAL.

La présente invention concerne des ensembles compris dans des réseaux de communication comprenant des serveurs.

Plus précisément elle concerne des ensembles de communication dans lesquels le débit de transmission de données des serveurs vers les utilisateurs est fortement augmenté.

### ETAT DE L'ART.

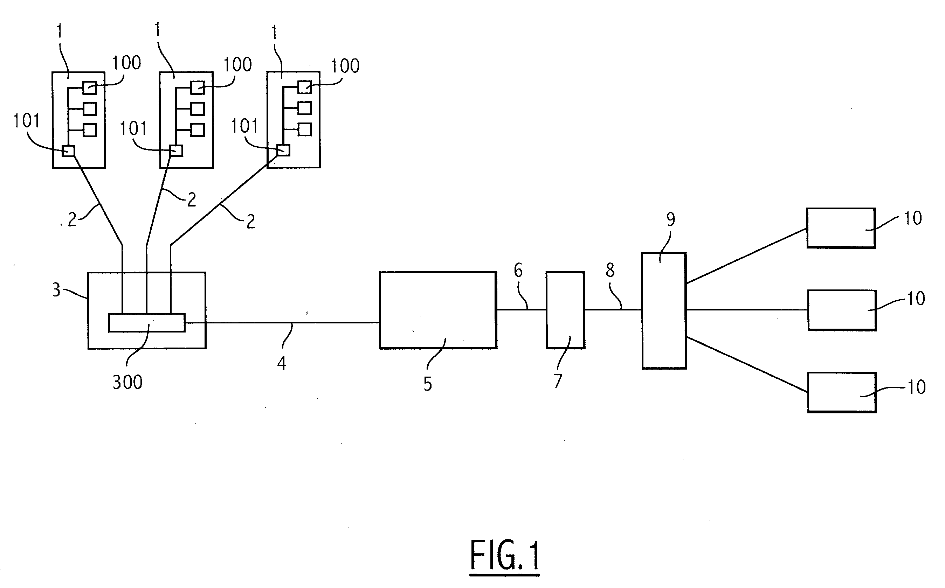

La figure 1 représente un ensemble de dispositifs établis en réseaux de communication selon l'état de la technique.

Une communication s'établit entre des unités d'activités 1 d'une part et des fournisseurs de services 10 d'autre part.

Les unités d'activités 1 comportent des moyens de communication et/ou informatiques 100, sur lesquels des utilisateurs veulent avoir accès à un certain nombre de services. Ces services comportent notamment des services d'applications de programmes ou des services du type Internet.

Les moyens 100 comportent ainsi des moyens du type ordinateurs, imprimantes réseau, télécopieurs, téléphones ou des serveurs vidéo par exemple.

Les services d'applications et les services du type Internet sont fournis par les fournisseurs 10. On entend notamment par service Internet des présentations de pages et de sites hébergés, ou des services de type « Web ».

La communication entre les unités d'activités 1 et les fournisseurs 10 suppose l'échange de données entre ces deux extrémités. L'échange de données s'effectue par un passage des données à travers différents éléments.

En effet, les moyens informatiques et/ou de communication 100 compris dans les unités d'activités 1 sont généralement établis en réseaux internes à l'unité d'activité. Les unités d'activités 1 peuvent par exemple faire référence à des petites et moyennes entreprises. Les unités d'activité 1 peuvent également être des petits établissements de grands groupes ou entreprises, ou des antennes de collectivités locales ou d'administrations centrales. Elles comportent alors un réseau informatique sur leur lieu d'activité. Cependant, ces unités d'activités peuvent tout à fait également être des utilisateurs du type particuliers du grand public. Dans ce cas, la structure du réseau est bien entendu plus simple et comporte moins d'éléments.

Chaque réseau interne aux unités d'activités 1 est relié à une interface 101, cette interface étant du type haut débit. L'interface 101 peut donc ainsi être un modem du type xDSL.

L'interface haut débit 101 est le point de départ et le point d'arrivée des échanges de données entre les moyens 100 de chaque unité d'activités 1 et les fournisseurs 10.

A partir de cette interface haut débit 101, le réseau de communication se poursuit généralement sur une boucle locale 2 en cuivre.

Cette boucle locale 2 se poursuit jusqu'à arriver vers un central téléphonique 3. Le central 3 regroupe l'ensemble des boucles locales 2 issues des unités d'activités 1. Le central téléphonique 3 est relié par une câble à un multiplexeur de lignes à haut débit, généralement du type DSLAM (« Digital Subcriber Line Access Multiplexer ») selon la terminologie anglo-saxonne généralement utilisée par l'homme du métier.

A partir de ce DSLAM 300, une connexion 4 du type dorsale locale - ou « back-bone » selon la terminologie anglo-saxonne utilisée par l'homme du métier - s'établit vers un opérateur régional 5.

Jusqu'à présent, tous les transferts d'information sont effectués sous le protocole ATM (Asynchronous Transfert Mode).

L'opérateur régional 5 envoie ensuite par une connexion 6 le flux d'informations concerné en protocole ATM vers un convertisseur 7, du type BAS (Broad Band Access Server), afin de transformer ce flux ATM en flux IP (Internet Protocole). Ce flux IP est ensuite envoyé par une connexion 8 vers un réseau 9 du type travaillant sous le protocole IP.

Ce réseau peut-être national ou international afin d'être envoyé, toujours selon le protocole IP, vers les fournisseurs de service 10.

Bien entendu, les informations sont transmises à partir des fournisseurs 10 vers les unités d'activité 1 selon le chemin inverse.

Les utilisateurs des moyens 100 des unités d'activités 1 peuvent en outre souhaiter utiliser d'autres services que des services Internet ou Web. Ces services supplémentaires peuvent notamment comporter des services du type FAH (Fournisseur d'Application Hébergée) ou ASP (Application Service Provider) selon la terminologie anglo-saxonne. Ces services utilisent une combinaison de langages du type HTML, JAVA, Active X, ou des protocoles de déport d'écran.

L'utilisation du mode ASP nécessite une qualité de service importante et un temps de réponse très court. Il s'agit en effet d'entretenir constamment une session entre un fournisseur de services et un utilisateur. Il faut que ces deux extrémités puissent échanger très rapidement des informations entre les utilisateurs devant les moyens informatiques 100 et les fournisseurs de services ASP.

La qualité de service est gérable quand l'échange d'informations est effectué par exemple selon un flux ATM. En effet, le flux ATM permet de garantir des classes déterminées de qualité de service.

Par contre, l'architecture 1 n'assure pas une qualité de service suffisante pour le maintien de la session entre les moyens 100 et les fournisseurs 10. En effet, le nombre d'intermédiaires et les longues distances mises en jeu ne permettent pas des vitesses de transfert suffisantes avec la qualité de service requise. Les temps de latence sont multipliés par le nombre d'intermédiaires. Les débits ne sont pas garantis. Les pirates peuvent se brancher et parasiter le signal à n'importe quel niveau intermédiaire. La fiabilité est donc très faible.

C'est pourquoi, compte tenu des distances et du nombre d'intermédiaires entre les unités d'activité 1 et les fournisseurs 10, il n'est pas envisageable de fournir des applications ASP à très haut débit garanti et fiables sur les moyens 100 à partir de l'architecture visible à la figure 1. Les applications ASP sur l'architecture de la figure 1 ne permettent pas de fournir non plus un temps de latence faible, ni un niveau de sécurité satisfaisant.

### PRÉSENTATION DE L'INVENTION.

L'invention propose de pallier ces inconvénients.

Un but de l'invention est de fournir des moyens d'accès à très haut débit pour la fourniture à des unités d'activité d'applications hébergées chez des fournisseurs. La fourniture sera de plus faite avec un faible temps de latence, une haute fiabilité et une très forte sécurité.

Un des buts de l'invention est d'étendre le réseau local haut débit des unités d'activité jusqu'aux fournisseurs de services d'applications. Les débits sont déterminés et garantis.

Un autre but de l'invention est de mutualiser pour un ensemble d'unités d'activités des moyens du type fournisseurs de services et d'applications.

Il est possible de créer un réseau local virtuel pour plusieurs unités d'activités et de créer des communautés virtuelles d'unités d'activités utilisant ce réseau virtuel.

Enfin un autre but de l'invention est de fournir et de mutualiser des moyens de sécurité d'accès à un réseau de télécommunication du type Intemet.

A cet effet, l'invention propose un ensemble comportant une pluralité d'unités d'activité, chaque unité comportant des moyens informatiques et/ou de communication connectés à une interface à haut débit, chaque interface à haut débit étant reliée à une boucle locale en cuivre s'étendant jusqu'à un central téléphonique qui collecte les boucles locales issues des unités d'activité, caractérisé en ce qu'il comporte un îlot comportant des moyens formant serveur de fichiers pour des applications du type client/serveur, lesdits moyens étant reliés à l'interface haut débit des unités d'activité par l'intermédiaire d'un câble de renvoi branché sur le central téléphonique.

L'îlot est une entité, et les composants qu'il comporte sont situés sur un même site. Comme décrit plus en détail par la suite, il comporte un centre d'hébergement, des moyens d'accès, des moyens de commutation et de transmission à proximité de l'utilisateur.

L'invention est avantageusement complétée par les caractéristiques suivantes, prises seules ou en une quelconque de leur combinaison techniquement possible :
- l'îlot comporte des moyens formant serveur d'applications informatiques ;
- l'îlot comporte en outre des moyens formant serveur de messagerie, lesdits moyens étant eux aussi reliés à l'interface haut débit des unités d'activité par l'intermédiaire d'un câble de renvoi branché sur le central téléphonique ;
- l'îlot comporte en outre des moyens formant serveur de base de données ;
- l'îlot comporte en outre des moyens aptes à fournir des données pour des applications tournant dans les moyens informatiques des unités d'activités ;
- les unités d'activité et l'îlot comportent des moyens aptes à réaliser une copie de sauvegarde des données supportées par les serveurs de fichiers et les serveurs de base de données, cette copie de sauvegarde étant placée au sein même des unités d'activités, aussi souvent que nécessaire grâce au très haut débit garanti ;
- les moyens formant serveur d'applications sont aptes à fournir des applications du type client léger ;
- l'îlot comporte des moyens formant serveur vidéo ;
- l'îlot comporte des moyens sécurisés d'accès au réseau Internet ; et
- l'îlot comporte des moyens de collecte téléphonique.

### PRESENTATION DES FIGURES

D'autres caractéristiques, buts et avantages de l'invention ressortiront de la description qui suit, qui est purement illustrative et non limitative et qui doit être lue en regard des dessins annexés sur lesquels :
- La figure 1, déjà commentée, présente la structure classique d'une architecture d'un réseau de communication entre des fournisseurs de services Internet et des unités d'activités ; et
- La figure 2 représente un mode de réalisation possible selon l'invention.

### DESCRIPTION DETAILLEE DE L'INVENTION.

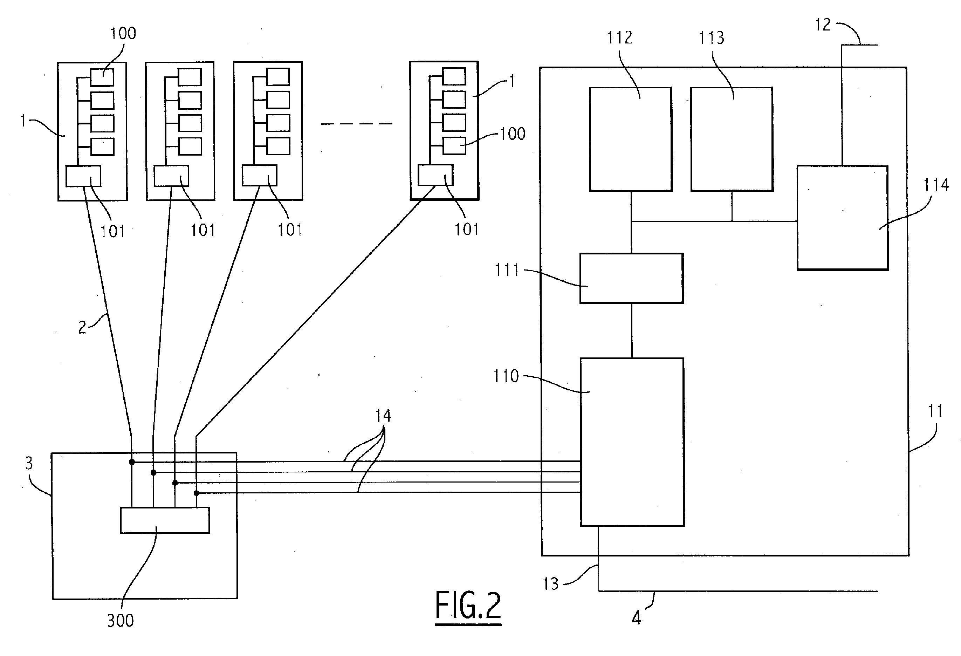

La figure 2 représente schématiquement un mode de réalisation possible de l'invention.

Selon ce mode de réalisation, on établit une communication et un échange de données entre des unités d'activités 1 et un fournisseur de services 11, que l'on appellera par la suite îlot. L'îlot 11 est une entité, et les composants qu'il comporte sont situés sur un même site. Comme décrit plus en détail par la suite, il comporte un centre d'hébergement, des moyens d'accès, des moyens de commutation et de transmission à proximité de l'utilisateur.

Selon le mode de réalisation possible représenté, les unités d'activités 1 comportent des moyens informatiques et/ou de communication 100 établis en réseaux internes. Les unités d'activités 1 sont celles envisagées dans la description de l'état de la technique.

Les moyens informatiques 100 peuvent comporter des ordinateurs et des imprimantes de réseaux par exemple. Les moyens 100 peuvent également comporter des moyens de communication du type téléphone, télécopieur, imprimantes télécopieurs, des serveurs vidéo, etc.

Les moyens 100 établis en réseau sont reliés à une interface 101 vers l'extérieur de chaque unité d'activité 1.

Ces moyens formant interface 101 sont à haut débit.

On entend par interface à haut débit des moyens qui peuvent comporter, par exemple, des modems de télécommunications du type xDSL (« x Digital Subscriber Line ») ou des équipements intégrés multiservices du type IAD (« Integrated Access Device »).

La technologie xDSL peut préférentiellement être du type à ADSL (« Asymmetric Digital Subscriber Line »), SDSL (« Symmetric Digital Subscriber Line»), HDSL («High-data-rate Digital Subscriber Line»), G.SHDSL (« Single-pair High-speed Digital Subscriber Line »).

L'interface 101 de chaque unité d'activité 1 est classiquement reliée à une boucle locale en cuivre 2 qui aboutit à un central téléphonique 3. Ce central téléphonique 3 est relié à des moyens multiplexeurs de lignes haut débit 300. Ces moyens multiplexeurs, préférentiellement du type DSLAM, sont reliés classiquement par la liaison 4 vers un opérateur régional comme dans la solution de l'art antérieur représentée à la figure 1.

Le mode de réalisation possible de l'ensemble selon l'invention comporte un îlot 11 comportant des moyens 112 formant serveur de fichiers et/ou serveur d'applications. Ces moyens 112 sont reliés à chaque interface 101 des unités d'activité 1 par l'intermédiaire d'un câble de renvoi 14 branché d'une part sur le central téléphonique 3 et d'autre part sur une interface 110 de l'îlot 11. Le câble de renvoi se branche au niveau du répartiteur ou du sous-répartiteur du central téléphonique 3.

Les moyens 110 formant interface comportent un multiplexeur de lignes haut débit. Il est préférentiellement du type DSLAM.

Les moyens 112 utilisent préférentiellement un protocole du type IP.

Le protocole utilisé sur la boucle locale 2 haut débit est préférentiellement du type ATM.

C'est pourquoi l'îlot 11 comporte des moyens 111 formant convertisseur de protocole, reliés d'une part aux moyens 110 et d'autre part aux moyens 112. Les moyens 111 comportent préférentiellement un BAS.

Ainsi, les moyens 111 permettent de transformer les données issues des unités 1 sous le protocole ATM en des données sous un protocole IP qui est préférentiellement utilisé par les moyens formant serveur d'application et/ou serveur de fichier 112. La conversion dans le sens inverse, des données issues des moyens 112 vers les unités 1, est également assurée par les moyens compris dans l'îlot 11.

Les moyens 110 comportent en outre une liaison 13 apte à assurer une liaison avec un opérateur régional par l'intermédiaire d'une liaison, par exemple du type ATM.

Le DSLAM peut être préférentiellement de technologie ADSL ou G.SHDSL, et fournir ainsi un débit égal à une valeur allant jusqu'à 2.3 Mégabits symétrique par paires de cuivre, ce débit étant garanti.

Dans le cas du G.SHDSL, la technologie selon l'invention permet l'agrégation de par exemple 4 paires de cuivre par site distant, ce qui permet d'obtenir un débit agrégé de 9.2 mégabits garanti.

Les services de fourniture d'applications et de fichiers par les moyens 112 sont réalisables grâces aux considérables débits distants autorisés par l'agrégation, notamment des liens G.SHDSL.

Selon une variante, le module de conversion 111 est compris dans le module 110.

Les moyens 112 forment serveur de fichiers et fonctionnent en mode client/serveur classique, et fournir alors un service de « back-office » déporté et administré dans l'îlot 11.

Les moyens 112 peuvent également comporter des serveurs de gestion de base de données, d'architecture client/serveur. Les moyens clients sont ceux de l'entreprise ou des unités d'activités 1.

Le matériel informatique 100 compris dans les unités d'activité 1 reste classique dans tous les cas.

Les services de fichiers et de gestion de base de données ainsi que les services d'applications peuvent par exemple tourner sous des systèmes d'exploitation standard.

Les moyens peuvent être le support de nombreuses applications collaboratives standard.

Préférentiellement, l'îlot 11 comporte également des moyens 113 formant serveur de messagerie. Ces moyens 113 sont reliés aux interfaces des unités d'activités par l'intermédiaire du câble de renvoi 14, ce câble étant relié au répartiteur ou sous répartiteur du central téléphonique 3.

Les fonctionnalités fournies par le serveur de messagerie 113 sont principalement la messagerie mutualisée, les agendas partagés, les annuaires d'entreprise personnalisés et les fichiers partagés.

Cette proximité des serveurs 112 d'applications ou de fichiers et des serveurs 113 de messagerie permet de mutualiser les serveurs pour plusieurs unités d'activités 1.

Ceci représente l'énorme avantage de permettre l'emploi de serveurs 112 et 113 et d'applications plus performants que ceux que les unités d'activités 1 pourraient s'offrir normalement.

La figure 2 montre que l'îlot 11 comporte préférentiellement une unité 114 de sécurisation de liaison Internet 12. Le module sécurisé 114 permet d'avoir accès à des serveurs Web et des services Web accessibles de l'intérieur comme de l'extérieur de l'entreprise, cette entreprise pouvant comporter une ou plusieurs unités d'activités 1, au travers des interfaces Internet HTTP (« Hyper Text Transfert Protocol »), FTP (« File Transfert Protocol »), etc.

Ces moyens 114 comportent préférentiellement un module du type DMZ (« DeMilitarized Zone » selon la terminologie anglo-saxonne généralement utilisée).

Avantageusement, le module 114 comporte des modules du type VPN (Virtual Private Network) et un module pare feu (ou « fire wall » selon la terminologie anglo-saxonne généralement utilisée).

Selon une variante avantageuse, les moyens 113 comportent des fonctionnalités du type accès à la messagerie hors des unités d'activité 1, par exemple du type fonctionnalités VPN. Avec la liaison Internet sécurisée 12, les utilisateurs nomades appartenant aux unités 1 ont la possibilité d'utiliser une messagerie accessible hors de l'unité 1, lors de leurs déplacements professionnels par exemple.

Avantageusement, le module pare feu supporte un flux Internet continu et permet la gestion des VPN.

Avantageusement, le module 114 comporte des serveurs d'anti-virus.

Le module 114 comporte alors des serveurs dédiés au filtrage des flux HTTP et FTP.

Il comporte également un serveur dédié au filtrage des flux SMTP (« Simple Mail Transfert Protocol ») et des fichiers attachés.

Selon une variante préférée, les serveurs dédiés à chaque type de flux sont en continu en liaison et remis à jour grâce à la connexion 12 avec des éditeurs d'anti-virus.

Chaque utilisateur possède une boîte aux lettres commune au domaine privé de l'entreprise et au domaine public Internet.

Par sécurité chaque entreprise ou communauté virtuelle n'est vue que sous son propre VLAN (Virtual Local Area Network).

Les applications peuvent aussi tourner sous des programmes de mode terminal déporté et de déport d'affichage. Les moyens d'applications 112 permettent la fourniture de fichiers pour des applications du type client léger, ou « front office ». Dans ce cas, les applications tournent sur les postes 100 des utilisateurs.

Ils peuvent également être aptes à former des serveurs de bases de données. Les bases de données peuvent être ainsi mutualisées.

Selon une autre variante avantageuse, l'îlot 11 comporte des modules de collecte téléphonique.

Les moyens de collecte téléphoniques comportent avantageusement des services d'impressions de télécopie et une connexion à haut débit pour des liaisons téléphoniques avec des opérateurs alternatifs et/ou des collectes étendues vers un opérateur particulier. Des conversations téléphoniques d'utilisateurs appartenant à une même communauté peuvent s'effectuer sans passer par l'intermédiaire d'un opérateur.

La connexion à la dorsale pourra se faire selon un protocole de transport de voix. Cette application permet de récupérer les conversations téléphoniques des utilisateurs dans les unités d'activités 1 et de les envoyer vers un opérateur téléphonique de leur choix.

Selon une autre variante avantageuse, l'îlot 11 comporte des serveurs vidéo. Ces serveurs peuvent transmettre des flux vidéo en mode « unicast », (spécifique pour chaque utilisateur) en temps réel ou en temps différé. Ils permettent également des applications de relais de contenu vidéo à la demande et/ou avec paiement à l'acte. La qualité de telle retransmission peut être de moyenne ou haute définition.

De plus, selon une variante avantageuse, unités d'activité 1 et l'îlot 11 comportent des moyens aptes à réaliser une copie de sauvegarde des données supportées par les serveurs de fichiers et les serveurs de base de données, cette copie de sauvegarde étant placée au sein même des unités d'activités, aussi souvent que nécessaire grâce au très haut débit garanti.

Bien entendu, l'ensemble des moyens formant serveur d'applications, de base de données, de fichiers, ou vidéos pour clients légers ou client/serveur sont liés aux interfaces haut débit des unités d'activité par l'intermédiaire du câble de renvoi. Ainsi tous ces moyens sont à proximité des unités d'activités, dans l'îlot.

## Revendications

1. Ensemble comportant une pluralité d'unités d'activités (1) comportant chacune des moyens informatiques et/ou de communications (100) connectés à une interface à haut débit (101), **caractérisé en ce que**:
- chacune des interfaces à haut débit (101) est raccordée à un répartiteur (300) d'un central téléphonique (3) par l'intermédiaire d'une boucle locale respective (2) en cuivre,
- le répartiteur (300) du central téléphonique (3) est directement connecté à un îlot (11), situé à proximité, comprenant un réseau local virtuel, par l'intermédiaire d'un câble de rappel (14) et d'un multiplexeur de lignes à haut débit (110), cet îlot (11) comportant un convertisseur de protocole (111) entre le protocole de transmission propre aux interfaces à haut débit et le protocole utilisé par le réseau virtuel, ainsi que des moyens (112) formant serveurs de fichiers pour des applications de type client/serveur.

2. Ensemble selon la revendication 1, **caractérisé en ce que** la susdite interface à haut débit (101) ainsi que le multiplexeur de lignes à haut débit (110) sont de type DSLAM de technologie xDSL ou G.SHDSL.

3. Ensemble selon la revendication 1, **caractérisé en ce que** le protocole utilisé par le réseau virtuel de l'îlot (11) est le protocole IP.

4. Ensemble selon la revendication 1, **caractérisé en ce que** le multiplexeur de lignes à haut débit (110) est relié par une liaison classique (13) vers un opérateur régional par l'intermédiaire d'une liaison de type ATM.

5. Ensemble selon la revendication 1, **caractérisé en ce que** le susdit multiplexeur de lignes à haut débit (110) et le convertisseur de protocole (111) constituent un même module.

6. Ensemble selon la revendication 1, **caractérisé en ce que** le réseau virtuel de l'îlot (11) comprend un serveur de messagerie (113) comportant une messagerie mutualisée, des agendas partagés, des annuaires d'entreprise personnalisés et/ou des fichiers partagés et est connecté au réseau Internet par l'intermédiaire d'une unité de sécurisation (114) de liaison Internet.

7. Ensemble selon l'une des revendications précédentes, **caractérisé en ce que** le réseau virtuel de l'îlot (11) comprend les moyens (112) formant un serveur de base de données.

8. Ensemble selon l'une des revendications précédentes, **caractérisé en ce que** le réseau virtuel de l'îlot (11) comprend les moyens (112) aptes à fournir des données pour des applications exploitées dans les moyens informatiques (100) de la susdite pluralité d'unités d'activités (1).

9. Ensemble selon l'une des revendications précédentes, **caractérisé en ce que** la susdite pluralité d'unités d'activités (1) comprend des moyens aptes à réaliser une copie de sauvegarde des données supportées par les moyens (112) de serveurs de fichiers et de serveurs de base de données, la susdite copie de sauvegarde étant placée au sein même de la pluralité d'unités d'activités (1), aussi souvent que nécessaire grâce au très haut débit garanti.

10. Ensemble selon l'une des revendications précédentes, **caractérisé en ce que** les moyens (112) formant serveurs d'applications sont aptes à fournir des applications du type client léger.

11. Ensemble selon l'une des revendications précédentes, **caractérisé en ce que** le réseau virtuel de l'îlot (11) comprend des moyens formant serveur vidéo.

12. Ensemble selon l'une des revendications précédentes, **caractérisé en ce que** le réseau virtuel de l'îlot (11) comprend des moyens de collecte téléphonique.
